# EUROPÄISCHE PATENTANMELDUNG

(11) **EP 3 046 012 A1**
(43) Veröffentlichungstag der Anmeldung: **20.07.2016**
(21) Anmeldenummer: 15151979.0
(22) Anmeldetag: 21.01.2015
(51) Int. Cl.: G06F 3/0481

(54) **Verfahren zum Hervorheben eines Mausanzeiger in einer Bildschirmdarstellung**

(30) Priorität: 15.01.2015 EP 15151244
(71) Anmelder: Siemens Schweiz AG, 8047 Zürich (CH)
(72) Erfinder: Stamm, Bernhard, 8500 Frauenfeld (CH); Riedweg, Dominik, 8400 Winterthur (CH)
(74) Vertreter: Maier, Daniel Oliver

(57) **Zusammenfassung**

Der vorliegenden Erfindung liegt die Aufgabe zugrunde ein Verfahren zum Hervorheben der aktuellen Position eines Mausanzeigers anzugeben, bei dem der Bediener den Mausanzeiger in einfacher und schneller Weise auch bei der Verwendung einer Vielzahl von Bildschirmen wiederfindet.

Diese Aufgabe wird erfindungsgemäss durch ein Verfahren zum Hervorheben des aktuellen Ortes eines Mauszeigers (4) in einer sich über mehrere Bildschirme (12 bis 26) ausdehnenden Darstellung zur Vornahme von Bedienhandlungen an und eines Betriebszustandes einer technischen Anlage, insbesondere eines Leitsystems für Schienenverkehr, gelöst, umfassend die folgenden Schritte:
a) Definition einer temporär ausführbaren Animation (2, 28) in Bezug auf den aktuellen Ort des Mauszeigers (4);
b) Definition eines Bedienmusters (30) zum Auslösen der Ausführung der Animation (2, 28); und
c) Vornahme des Bedienmusters (30) und in Reaktion auf die Vornahme des Bedienmusters (30) das Ausführen der Animation (2, 28).

Auf diese Weise genügt die Vornahme des Bedienmusters durch den Bediener um die Animation zu starten. Diese Animation kann dabei vielfältig gestaltet sein und hat hinsichtlich der grafischen Ausführung hohe Freiheitsgrade hinsichtlich der Farbgestaltung und/oder der optischen Dynamik und/oder der räumlichen Ausdehnung. Einfache Beispiele am aktuellen Ort des Mauszeigers sind das Blinken einer Lampe, das Einblenden eines Fadenkreuzes, die Darstellung der Explosion einer Feuerwerksrakete, oder ein optisch hervorgehobener Wegverlauf, an dessen Ende sich der Mausanzeiger befindet, beispielsweise der Lauf einer stilisierten Katze zum Ort des Mausanzeigers.

## Beschreibung

Die vorliegende Erfindung bezieht sich auf ein Verfahren zum Hervorheben des aktuellen Ortes eines Mauszeigers in einer sich über mehrere Bildschirme ausdehnenden Darstellung zur Vornahme von Bedienhandlungen an und eines Betriebszustandes einer technischen Anlage.

Beispiele für technische Anlagen im Sinne der vorliegenden Erfindung sind alle Arten von Produktionsanlagen, chemische Prozessanlagen, Anlagen zur Erzeugung elektrischer Energie, Verkehrsnetzwerke auf der Strasse, der Schiene, der Luft und auf dem Wasser, um hier nur einige ohne Anspruch auf Vollständigkeit zu nennen. Diese Anlagen werden in der Regel zentral von einem Leitstand aus bedient und verfügen über computergestützte Bedienarbeitsplätze und eine oder mehrere Datenverarbeitungsanlagen, auf denen eine Applikation zur Vornahme von Bedienhandlungen zur Steuerung der technischen Anlage und zur Darstellung des Betriebszustandes der technischen Anlage ausgeführt wird.

Beispielhaft für alle vorstehend genannten technischen Anlagen verfügt bei einem Leitsystem für den Schienenverkehr jeder Bedienplatz eines Fahrdienstleiters über eine Vielzahl von Bildschirmen, auf denen der Betriebszustand des Eisenbahnnetzwerkes, wie zum Beispiel die eingestellten Fahrstrassen, die Signalstellung, die Weichenlagen, der aktuelle Ort von Zügen usw., dargestellt ist. Im Rahmen dieser Leitsystemapplikation sind dem Fahrdienstleiter eine hohe Anzahl verschiedenster Bedienhandlungen ermöglicht, die dieser in der Regel durch die Positionierung eines Mauszeigers auf einem Bedienfeld und entsprechendes Anklicken des Bedienfeldes auslösen kann. Da ein derartiger Arbeitsplatz, zum Beispiel im Rahmen des Leitsystems ILTIS NETZ der Siemens Schweiz AG, umfasst bei den schweizerischen Bundesbahnen heute acht Bildschirme, die in einer 2x4 Matrix (zwei Bildschirme übereinander, vier Bildschirme nebeneinander) angeordnet sind.

Daher ist es leicht nachvollziehbar, dass der Mausanzeiger je nach Situation und Farbschema der Applikation nur sehr schwer wieder auf einem der Vielzahl von Bildschirmen wiedergefunden werden kann, wenn ihn der Fahrdienstleiter erst einmal aus den Augen verloren hat. Hektische Bewegungen mit der Computermaus und gleichzeitiges Absuchen der Bildschirme sind daher leider derzeit das einzige Rezept zum Wiederauffinden des Mauszeigers. Auch die Vergrösserung des Icons für den Mausanzeiger wäre ein geeignetes Rezept für eine bessere Wiederauffindbarkeit, jedoch kann die gewählte Grösse dann bei der späteren Vornahme von Bedienhandlungen nachteilig sein; vor allen Dingen dann, wenn die Grösse des Icons benachbarte Bedienfelder gleichzeitig überstreicht und daher die individuelle Adressierung eines Bedienfeldes verunmöglicht.

Der vorliegenden Erfindung liegt daher die Aufgabe zugrunde ein Verfahren zum Hervorheben der aktuellen Position eines Mausanzeigers anzugeben, bei dem der Bediener den Mausanzeiger in einfacher und schneller Weise auch bei der Verwendung einer Vielzahl von Bildschirmen wiederfindet.

Diese Aufgabe wird erfindungsgemäss durch ein Verfahren zum Hervorheben des aktuellen Ortes eines Mauszeigers in einer sich über mehrere Bildschirme ausdehnenden Darstellung zur Vornahme von Bedienhandlungen an und eines Betriebszustandes einer technischen Anlage, insbesondere eines Leitsystems für Schienenverkehr, gelöst, welches die folgenden Schritte umfasst:
a) Definition einer temporär ausführbaren Animation in Bezug auf den aktuellen Ort des Mauszeigers;
b) Definition eines Bedienmusters zum Auslösen der Ausführung der Animation; und
c) Vornahme des Bedienmusters und in Reaktion auf die Vornahme des Bedienmusters das Ausführen der Animation.

Auf diese Weise genügt die Vornahme des Bedienmusters durch den Bediener um die Animation zu starten. Diese Animation kann dabei vielfältig gestaltet sein und hat hinsichtlich der grafischen Ausführung hohe Freiheitsgrade hinsichtlich der Farbgestaltung und/oder der optischen Dynamik und/oder der räumlichen Ausdehnung. Einfache Beispiele am aktuellen Ort des Mauszeigers sind das Blinken einer Lampe, das Einblenden eines Fadenkreuzes, die Darstellung der Explosion einer Feuerwerksrakete, oder ein optisch hervorgehobener Wegverlauf, an dessen Ende sich der Mausanzeiger befindet, beispielsweise der Lauf einer stilisierten Katze zum Ort des Mausanzeigers. Weiter denkbar ist auch, dass die Darstellung des Bildschirms, auf dem sich der Mauszeiger befindet kurz verändert wird, z.B. in Helligkeit oder Farbe, oder dass die Darstellung der anderen Bildschirme verändert wird, z.B. durch abdunkeln, um einen groben Hinweis auf die Lage des Mauszeigers zu geben. Dies kann als alleinige Darstellung oder auch als Ergänzung erfolgen. Die tatsächlich gewählte Animation kann sich aufgrund der Vielzahl der Optionen auch sehr einfach von den bereits zur Darstellung von Warnhinweisen oder sonstigen mitteilungsbedürftigen Zustände verbrauchten Animationen unterscheiden.

Entsprechend kann es daher vorgesehen sein, dass die Animation am aktuellen Ort des Mausanzeigers ausgeführt wird. Ergänzend oder alternativ hierzu kann es aber vorgesehen sein, dass die Animation an einem vorgebbaren Ort auf einem der Bildschirme startet und einen zum aktuellen Ort des Mausanzeigers führenden Grafikverlauf aufweist.

In bedientechnisch einfacher Weise kann das Bedienmuster einem vorgebbaren Tastendruck oder einer vorgebbaren Tastenkombination auf einer Tastatur eines computergestützten Bedienplatzes der technischen Anlage entsprechen. Alternativ oder ergänzend hierzu kann das Bedienmuster einem vorgebbaren Tastendruck und/oder einem vorgebbaren Bewegungsmuster einer Computermaus eines computergestützten Bedienplatzes der technischen Anlage entsprechen. Denkbar sind hierbei beispielsweise die Ausführung einer kleinen Kreisbewegung und/oder einer kurzen Auf-/Abbewegung mit der Computermaus oder das kurze Auf-/Abbewegen des Scrollrades der Computermaus. Alternativ oder ergänzend hierzu kann das Bedienmuster auch nur im Bewegen der Maus nach einer definierbaren Ruhezeit bestehen.

Weiter ist es möglich, die Animation in die Applikation zur Vornahme der Bedienhandlungen und zur Darstellung des Betriebszustandes der technischen Anlage einzubetten. Diese Massnahme hat den Vorteil, dass kein Rückgriff auf die im Betriebssystem vorhandenen Mausoptionen, wie Blinkfrequenz, Grösse des Mauszeigersymbols vorgenommen werden muss, sondern die hohe Freiheitsgrade zur Ausgestaltung der Animation im Rahmen der Applikation ausgenutzt werden können.

Bevorzugte Ausführungsbeispiele der vorliegenden Erfindung wird nachfolgend anhand der Figuren näher erläutert. Dabei zeigen:
- Figur 1: eine erste schematische dargestellte Momentaufnahme einer Animation zur Lokalisierung eines Mausanzeiger in der leittechnischen Darstellung für einen Fahrdienstleiterarbeitsplatz im Schienenverkehr; und
- Figur 2: eine erste schematische dargestellte Momentaufnahme einer Animation zur Lokalisierung eines Mausanzeiger in der leittechnischen Darstellung für einen Fahrdienstleiterarbeitsplatz im Schienenverkehr.

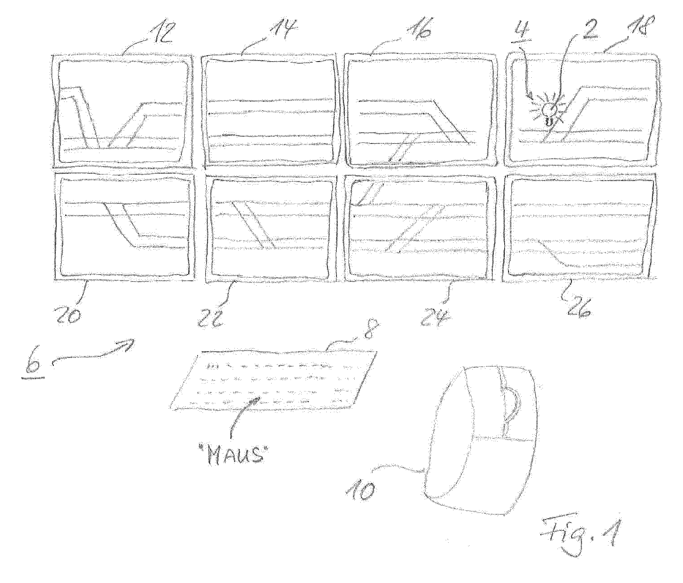

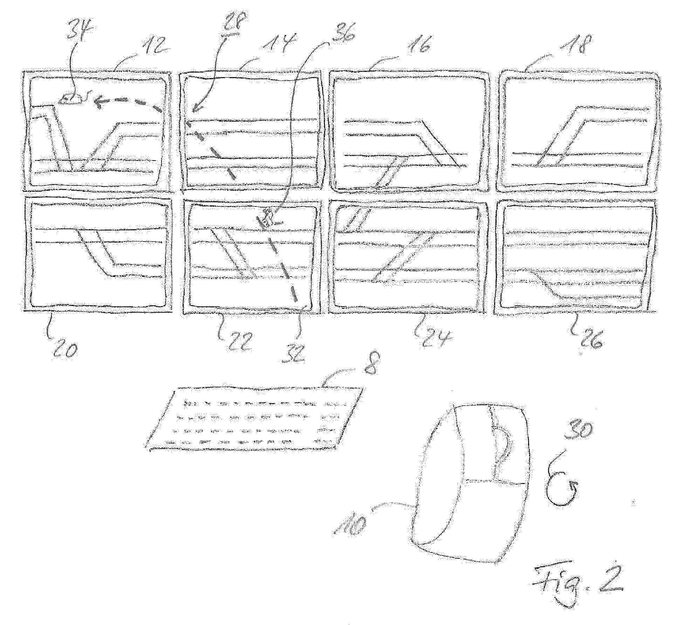

Figur 1 zeigt eine erste schematische dargestellte Momentaufnahme einer Animation 2 zur Lokalisierung eines Mausanzeigers 4 in der leittechnischen Darstellung für einen Fahrdienstleiterarbeitsplatz 6 im Schienenverkehr. Der Arbeitsplatz 6 umfasst eine Computertastatur 8, eine Computermaus 10, acht Bildschirme 12 bis 26. Auf den Bildschirmen 12 bis 26 ist sehr schematisch ein Abbild eines Abschnitts eines Schienenverkehrsnetzwerkes gezeigt. An dieser Stelle könnte aber jedes andere Übersichtbild zur Steuerung einer beliebigen technischen Anlage wie eingangs erwähnt gezeigt sein. Sehr oft ist es hier so, dass nach der Vornahme einer Bedienhandlung, die in der Regel durch die Positionierung des Mauszeigers 4 über einem Bedienfeld und das Anklicken des Bedienfeldes ausgeführt wird, eine gewisse Zeitspanne vergehen kann, in der der hier nicht weiter dargestellte Fahrdienstleiter vergessen hat, wo der Mausanzeiger 4 zuletzt positioniert gewesen. Weil diese Übersichtbilder in der Regel auch sehr viel komplexer sind als in der vereinfachten schematischen Darstellung gemäss den Figuren 1 und 2 gezeigt, besteht ein gewisses Problem den Mauszeiger 4 ohne die Vornahme von unbeabsichtigten Bedienhandlungen wieder zu finden.

Aus diesem Grund läuft im Rahmen der Applikation für die Anzeige und die Bedienhandlungen die Animation 2, die hier vorliegend an der aktuellen Position des Mauszeigers 4 als ein für fünf Sekunden aufblinkendes Symbol einer elektrischen Glühlampe ausgestaltet ist und hier vorliegend im Bildschirm 18 lokalisiert ist. Die Animation startet sobald von der Applikation erfasst worden ist, dass der Bediener über die Tastatur 8 das Wort "MAUS" in Grossbuchstaben eingegeben hat. Selbstverständlich sind hier auch jede andere beliebige, auch vom Bediener definierbare Tastenfolge möglich. Das hier gewählte Wort "MAUS" schliesst aber im vorliegenden Umfeld des Lupenbildes im Eisenbahnleitsystem aus, dass mit diesem Wort eine konkrete Bedienhandlung im Leitsystem unbeabsichtigt angestossen wird.

Figur 2 zeigt eine zweite Variante einer Animation 28, bei der eine stilisierte Katze 36 ausgehend von einem Startort 32 über einen optisch hervorgehobenen Weg in Richtung zu einer am aktuellen Ort des Mauszeigers 4 angeordneten Maus 34 läuft, hier zum Beispiel innerhalb einer Zeitspanne von drei Sekunden zu dem im Bildschirm 12 gelegenen Ort. Diese Animation 28 startet in Reaktion auf die Erfassung der Ausführung einer kleinen Kreisbewegung 30 mit der Computermaus 10. Wie schon bei dem vorangehenden Glühlampensymbol ist es dem Bediener so sehr einfach möglich, den Mausanzeiger 4 an seinem aktuellen Ort aufzuspüren.

Es sei an dieser Stelle nochmals erwähnt, dass die hier vorgestellten Beispiele tatsächlich nur beispielhaft sind und hohe Freiheitsgrade hinsichtlich der Gestaltung der Animationen 2, 28 und der Bedienmuster zum Auslösen der Animationen 2, 28 bestehen.

## Patentansprüche

1. Verfahren zum Hervorheben des aktuellen Ortes eines Mauszeigers (4) in einer sich über mehrere Bildschirme (12 bis 26) ausdehnenden Darstellung zur Vornahme von Bedienhandlungen an und eines Betriebszustandes einer technischen Anlage, insbesondere eines Leitsystems für Schienenverkehr, umfassend die folgenden Schritte:
a) Definition einer temporär ausführbaren Animation (2, 28) in Bezug auf den aktuellen Ort des Mauszeigers (4);
b) Definition eines Bedienmusters (30) zum Auslösen der Ausführung der Animation (2, 28); und
c) Vornahme des Bedienmusters (30) und in Reaktion auf die Vornahme des Bedienmusters (30) das Ausführen der Animation (2, 28).

2. Verfahren nach Anspruch 1,
**dadurch gekennzeichnet, dass**
die Animation (2, 28) am aktuellen Ort des Mausanzeigers (4) ausgeführt wird.

3. Verfahren nach Anspruch 1,
**dadurch gekennzeichnet, dass**
die Animation (2, 28) an einem vorgebbaren Ort (32) auf einem der Bildschirme (22) startet und einen zum aktuellen Ort des Mausanzeigers (4) führenden Grafikverlauf aufweist.

4. Verfahren nach einem der Ansprüche 1 bis 3,
**dadurch gekennzeichnet, dass**
das Bedienmuster einem vorgebbaren Tastendruck oder einer vorgebbaren Tastenkombination auf einer Tastatur eines computergestützten Bedienplatzes der technischen Anlage entspricht.

5. Verfahren nach einem der Ansprüche 1 bis 4,
**dadurch gekennzeichnet, dass**
das Bedienmuster einem vorgebbaren Tastendruck und/oder einem vorgebbaren Bewegungsmuster (30) einer Computermaus (10) eines computergestützten Bedienplatzes der technischen Anlage entspricht.

6. Verfahren nach einem der Ansprüche 1 bis 5,
**dadurch gekennzeichnet, dass**
die Animation (2, 28) in die Applikation zur Vornahme der Bedienhandlungen und zur Darstellung des Betriebszustandes der technischen Anlage eingebettet ist.
